# EUROPÄISCHE PATENTANMELDUNG

(11) **EP 0 650 037 A1**
(43) Veröffentlichungstag der Anmeldung: **26.04.1995**
(21) Anmeldenummer: 94103146.0
(22) Anmeldetag: 03.03.1994
(51) Int. Cl.: G01F 23/16

(54) **Vorrichtung zum Überwachen von Flüssigkeitsständen**

(30) Priorität: 20.10.1993 DE 4335720
(71) Anmelder: WILO GmbH, D-44263 Dortmund (DE)
(72) Erfinder: Ley, Siegfried, D-51491 Marialinden (DE); Arnswald, Kurt Werner, D-53797 Lohmar (DE)
(74) Vertreter: COHAUSZ HASE DAWIDOWICZ & PARTNER

(57) **Zusammenfassung**

Die Erfindung betrifft eine Vorrichtung zum Überwachen von Flüssigkeitsständen mit einem den jeweiligen Flüssigkeitsstand erfassenden Meßfühler, der durch einen mit gasförmigen Füllmedium gefüllten Balg gebildet ist, dessen von der Flüssigkeit benetzte Wände aus in Richtung des Flüssigkeitsdruckes nachgiebigem Material bestehen und nach der Befüllung des Balges ungespannt sind, wobei der Balg eine gegenüber der Flüssigkeit abgedichtete Öffnung aufweist, an die mindestens ein Sensor angeschlossen ist, welcher die mit einer Änderung des Flüssigkeitsstandes einhergehende Zustandsänderung des in dem Balg enthaltenen Mediums erfaßt, und wobei der Balg von einem Gehäuse umgeben ist, das mindestens eine Verbindungsöffnung aufweist, durch die die zu überwachende Flüssigkeit dringt und in dessen oberen Innenraum, insbesondere in der Behälterwandung eine Entlüftungsöffnung ist.

## Beschreibung

Die Erfindung betrifft eine Vorrichtung zum Überwachen von Flüssigkeitsständen mit einem den jeweiligen Flüssigkeitsstand erfassenden Meßfühler. Vorrichtungen dieser Art dienen zum automatischen Steuern von elektrischen Verbrauchern in Abhängigkeit von dem Stand einer Flüssigkeit in Becken, Abwässerkanälen etc. oder werden als Überwachungseinrichtungen eingesetzt. So ist es beispielsweise üblich, weitere Pumpen hinzuzuschalten, wenn der Flüssigkeitsstand in dem Kanal vorgegebene Höhenstufen überschreitet.

Aus der Praxis sind eine Vielzahl derartiger Vorrichtungen bekannt, die jeweils mit unterschiedlichen Meßfühlern ausgestattet sind. So werden die Flüssigkeitsstände bei einer bekannten Überwachungseinrichtung mittels eines Ultraschallsignals erfaßt, das auf die Oberfläche der Flüssigkeit gesendet wird. Diese Vorrichtung arbeitet zwar besonders präzise, hat aber den Nachteil, daß sie aufgrund der benötigten aufwendigen Sensoren teuer in der Herstellung ist. Ein weiterer Nachteil derartiger Ultraschallsysteme besteht darin, daß ihr Meßergebnis durch Schaumdecken verfälscht werden kann, die sich auf der Oberfläche der Flüssigkeit bilden können.

Neben der Ultraschallmessung ist es bekannt, zur Erfassung der Höhe einer Flüssigkeitssäule in unterschiedlichen Höhen angeordnete Widerstände oder Elektroden zu benutzen, die dann, wenn der Flüssigkeitsstand das entsprechende Niveau erreicht hat, ihren Widerstand ändern bzw. durchgeschaltet werden. Derartige Meßfühler sind zwar kostengünstiger als eine Ultraschallmessung, haben aber den Nachteil, daß sie in einer explosionsgefährdeten Umgebung, wie sie beispielsweise wegen der Möglichkeit einer Methangasbildung im Bereich von Abwässeerkanälen gegeben ist, aufgrund der Gefahr einer Funkenbildung nicht eingesetzt werden können. Darüber hinaus können die Elektroden verschmutzen und müssen dann von zusätzlichem Personal gereinigt werden.

Ferner ist es bekannt, als Meßfühler Schwimmkörper einzusetzen, die an schwenkbaren Armen oder Kabeln befestigt in ebenfalls unterschiedlichen Höhen beispielsweise eines Beckens angeordnet sein können. Bei Erreichen der entsprechenden Höhe durch den Flüssigkeitsspiegel wird der Arm durch den dann auf der Flüssigkeit aufliegenden Schwimmkörper verschwenkt und betätigt dabei einen elektrischen Schalter. Der Vorteil dieser sogenannten Schwimmerschalter besteht in ihrer einfachen Bauart, die eine preisgünstige Herstellung der entsprechend ausgestatteten Vorrichtung ermöglicht. Dieser günstige Preis hat zu einer weiten Verbreitung der mit Schwimmerschaltern ausgestatteten Vorrichtungen geführt.

Nachteilig an Schwimmerschaltern ist neben ihrer aufwendigen Montage, daß sie sich bei längerer Einsatzdauer als unzuverlässig erweisen, weil die Schwenkbewegung des Armes bzw. die Bewegung des Kabels durch Ablagerung behindert wird. Darüber hinaus kann ein Schwimmerschalter aufgrund seiner Bauweise nur größere Höhenänderungen erfassen, da stets ein gewisser Mindesthub benötigt wird, um einen für das Auslösen des Schalters ausreichenden Hub des Schwimmkörpers zu erreichen. Schließlich führt die Bauweise der Schwimmerschalter dazu, daß ihre Empfindlichkeit nicht mit der häufig erforderlichen Genauigkeit eingestellt werden kann, wobei für die Schwimmerschalter ebenfalls gilt, daß sie in explosionsgefährdeter Umgebung wegen der Gefahr einer Funkenbildung beim Betätigen der Schalter nicht eingesetzt werden können.

Schließlich gibt es sogenannte Membranschalter, deren Membran durch den statischen Druck der Flüssigkeit verschoben wird. Diese Verschiebung wird zur Betätigung mechanischer Schalter oder zum Verschieben einer Luftsäule benutzt, die ihrerseits ein elektrisches Bauelement betätigt. Membranschalter sind teuer, müssen entlüftet werden, sind nicht für stufenloses Messen innerhalb einer großen Wasserhöhe geeignet und müssen vor allem temperaturkompensiert werden.

Die Aufgabe der Erfindung besteht darin, eine kostengünstig herstellbare Vorrichtung der eingangs genannten Art zu schaffen, die ein Erfassen der Änderungen des Flüssigkeitsstandes mit hoher Genauigkeit ermöglicht und gleichzeitig zum Einsatz in explosionsgefährdeter Umgebung geeignet ist, sowie fernbedienbar ist.

Diese Aufgabe wird erfindungsgemäß dadurch gelöst, daß der Meßfühler durch einen mit einem gasförmigen Füllmedium gefüllten Balg gebildet ist, dessen von der Flüssigkeit benetzte Wände aus in Richtung des Flüssigkeitsdruckes nachgiebigem Material bestehen und nach der Befüllung des Balges ungespannt sind, wobei der Balg eine gegenüber der Flüssigkeit abgedichtete Öffnung aufweist, an die mindestens ein Sensor angeschlossen ist, welcher die mit einer Änderung des Flüssigkeitsstandes einhergehende Zustandsänderung des in dem Balg enthaltenen Mediums erfaßt.

Wesentlich für die Funktion des erfindungsgemäß als Meßfühler eingesetzten Balges ist, daß er nicht prall mit dem Füllmedium gefüllt ist, sondern daß seine elastischen, d.h. in Richtung der Druckbelastung durch die Flüssigkeit nachgiebigen Wände ungespannt schlaff durchhängen. Auf diese Weise ist sichergestellt, daß die Materialeigenschaften der Balgwände keinen Einfluß auf die mit einer Veränderung des Flüssigkeitsstandes einhergehende Druckänderung des in dem Balg enthaltenen Mediums haben.

Als Material für den Balg können elastische Folien aus Kunststoff, Gummi oder auch wasserdichte Gewebe eingesetzt werden. So wird durch die kraftfreie Nachgiebigkeit des Balges gewährleistet, daß die Balgwände einer durch die Erwärmung des in dem Balg enthaltenen Mediums verursachten Ausdehnung des Mediums keinen Widerstand entgegensetzen. Auf diese Weise kann durch den von dem Füllmedium beaufschlagten Sensor eine Änderung des gleichmäßig auf die Außenfläche des Balges einwirkenden Flüssigkeitsdruckes unmittelbar und unverfälscht durch Temperatur oder Einwirkung des Balgmaterials erfaßt werden. Da im Bereich des Balges, in dem Bereich also, in dem die Höhenänderung des Flüssigkeitsstandes festgestellt wird, keine elektrischen Schaltvorgänge erfolgen, ist die erfindungsgemäße Vorrichtung zum unmittelbaren Einsatz in explosionsgefährdeter Umgebung geeignet. Dabei kann der Balg über eine Verbindungsleitung, die ebenfalls mit dem Füllmedium befüllt ist, mit einem Sensor verbunden sein, der außerhalb des explosionsgefährdeten Bereiches angeordnet ist.

Zum Erfassen von durch eine Änderung des Flüssigkeitsstandes verursachten Druckänderungen des Füllmediums haben sich in der Praxis besonders druckempfindliche Piezo-Widerstands-Sensoren bewährt. Eine Funkenbildung ist dabei ausgeschlossen, so daß die derart ausgebildete erfindungsgemäße Vorrichtung besonders zum Einsatz in explosionsgefährdeter Umgebung geeignet ist.

Zudem ermöglicht die erfindungsgemäße Vorrichtung trotz ihrer einfachen Konstruktion ein kontinuierliches Erfassen der Änderung des Flüssigkeitsstandes, da jede Änderung des Flüssigkeitsstandes unmittelbar eine Änderung des Zustandes des in dem Balg enthaltenen Mediums verursacht, welche wiederum unmittelbar zu einer Änderung des von dem Sensor abgegebenen Meßsignals führt. Somit können mit einem einzigen Meßfühler beliebige Flüssigkeitsstände überwacht werden. Es ist daher schon ein einziger Meßfühler ausreichend, um auch große Änderungen des Niveaus des Flüssigkeitsspiegels zu erfassen. Dies führt neben niedrigen Herstellkosten zu einer leichten Montierbarkeit der Vorrichtung. Darüber hinaus ist die Ferneinstellung der Vorrichtung leicht möglich. Auch das Eichen der Vorrichtung bei ihrer Inbetriebnahme ist vereinfacht und kann mit hoher Präzision erfolgen, da mechanische Einflüsse auf das Meßergebnis ausgeschlossen sind.

Wenn der Sensor nicht unmittelbarer Nähe des Balges angeordnet sein soll, kann die Öffnung des Balges über eine mit dem Füllmedium gefüllte Verbindungsleitung verbunden sein, an deren anderem Ende der Sensor angeodnet ist. Dabei sollten, sofern eine Beeinflussung des Meßergebnis durch ein Zusammendrücken des Schlauches nicht auszuschließen ist, die Wände der Verbindungsleitungen steif ausgebildet sein.

In der Praxis hat es sich bewährt, als Füllmedium Luft zu verwenden, weil auf diese Weise der Sensor auf besonders einfache Weise an den Balg bzw. die Verbindungsleitung angeschlossen werden kann.

Soll die erfindungsgemäße Vorrichtung nicht nur zum Überwachen, sondern auch zum Steuern von elektrischen Verbrauchern eingesetzt werden, so ist es sinnvoll, wenn der Sensor mit einer elektrischen Steuereinheit verbunden ist, die bei Überschreiten vorgebbarer Schwellwerte Signale zum Steuern des elektrischen Verbrauchers abgibt. Dabei sollten die Schwellwerte veränderbar sein, um eine möglichst vielseitige Einsetzbarkeit der Vorrichtung zu gewährleisten.

Die Einstellung der Schwellwerte kann dadurch erfolgen, daß durch einen ersten Regler ein erster Schwellwert und durch einen zweiten Regler die Differenz zwischen dem ersten und einem zweiten Schwellwert einstellbar ist. Auf diese Weise kann beispielsweise durch Verstellen des unteren, ersten Schwellwertes auch gleichzeitig der obere, zweite Schwellwert mitverstellt werden, solange die Differenz der beiden Schwellwerte unverändert bleibt. So kann der mit der erfindungsgemäßen Vorrichtung verbundene elektrische Verbraucher ohne weiteres ferngesteuert werden. Darüber hinaus kann die Steuereinheit bei Überschreiten eines maximalen Schwellenwertes ein Alarmsignal abgeben, das beispielsweise das Zuschalten von Hilfsaggregaten oder das Abschalten des Flüssigkeitszulaufes auslösen kann.

Bei einer vorteilhaften Ausgestaltung der Erfindung, die eine komfortable und explosionssichere Anordnung der Steuereinrichtung ermöglicht, sitzt die Steuereinrichtung in einer Steuereinheit ein, die entfernt zu dem elektrischen Verbraucher angeordnet ist, wobei die Steuereinheit über elektrische Leitungen mit dem elektrischen Verbraucher und der Sensor über eine zusätzliche Verbindungsleitung für das Füllmedium mit dem Balg bzw. der ersten Verbindungsleitung verbunden ist.

Die erfindungsgemäße Vorrichtung ist besonders zum Steuern und Überwachen einer Tauchmotorpumpe und insbesondere als Niveauregler geeignet. Dabei kann der Balg in einer Tasche einsitzen, die in einem Bereich des Gehäuses angeformt ist, der in der von der Tauchmotorpumpe geförderten Flüssigkeit eingetaucht ist und mit der Flüssigkeit in unmittelbarer Verbindung steht. Zusätzlich kann das Gehäuse als Schutz für die in oder an ihm befestigte Verbindungsleitung dienen, wobei die Montage der Pumpe in Verbindung mit der erfindungsgemäßen Vorrichtung dadurch erleichtert werden kann, daß die Verbindungsleitung zwischen der entfernt zu der Tauchmotorpumpe angeordneten Steuereinheit und der Tauchmotorpumpe über ein Kupplungsstück an die an oder in der Tauchmotorpumpe angeordnete Verbindungsleitung ankuppelbar ist. Schließlich ist es möglich, den Verbindungsschlauch zwischen der erfindungsgemäßen Vorrichtung und der Steuereinrichtung in einem gemeinsamen Schutzmantel mit den Leitungen zur Steuerung der Pumpe zu verlegen.

Besonders vorteilhaft ist es, wenn der Balg die Form eines länglichen Schlauches hat. Vorzugsweise wird vorgeschlagen, daß die Wände des Balgs bei ausreichender flexibilität besitzen, so daß bei keiner Druckdifferenz zwischen Außenseite und Innenseite des Balgs eine Balgwand sich nicht vor die Öffnung legt.

Nachfolgend wird die Erfindung anhand zweier Zeichnungen erläutert.

Es zeigen:

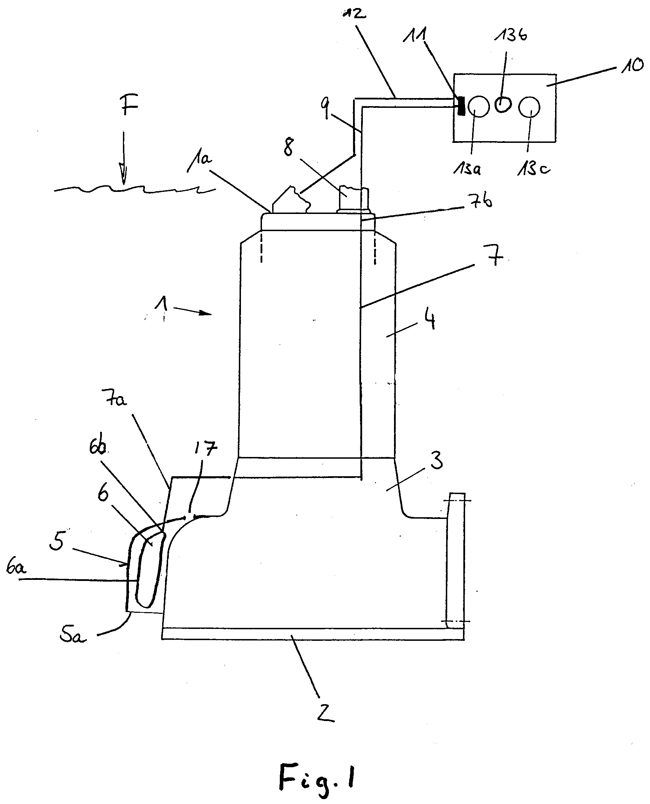

- Fig. 1: Eine Seitenansicht einer mit der erfindungsgemäßen Vorrichtung ausgestatteten Tauchmotorpumpe,
- Fig. 2: einen Schnitt durch ein Gehäuse, das einen Balg umgibt.

Die beispielsweise als Abwasserpumpe in einem Abwasserkanal eingesetzte Tauchmotorpumpe 1 weist einen Boden 2, eine aus Synthetikmaterial bestehende Kreiselkammer 3 und ein den Pumpenmotor umgebendes und als Kühlmantel wirkendes Gehäuse 4 auf. Seitlich an die in der von der Tauchmotorpumpe 1 geförderten Flüssigkeit einsitzenden Kreiselkammer 3 ist eine Tasche 5 angegossen, deren Boden 5a geöffnet derart ist, so daß die von der Tauchmotorpumpe geförderte Flüssigkeit ungehindert in sie eindringen kann. In der Tasche 5 sitzt ein Beutel 6 ein, dessen Wände 6a ungespannt schlaff durchhängen. Der Balg 6 weist eine Öffnung 6b auf, über die der Balg 6 an ein Ende 7a einer flexiblen oder starren Verbindungsleitung 7 angeschlossen ist. Die Verbindungsleitung 7 ist innerhalb des Tauchmotorpumpengehäuses 4 verlegt und so gegen Beschädigung und Einwirkungen durch die Flüssigkeit geschützt. Ihr anderes Ende 7b mündet in einem auf der Oberseite 1a der Tauchmotorpumpe 1 angeordneten Kupplungsstück 8, an das eine weitere Verbindungsleitung 9 anschließbar ist, über den der Balg 6 bzw. die Verbindungsleitung 7 lösbar mit einer Steuereinheit 10 verbunden ist. Am Ende der Verbindungsleitung 9 ist innerhalb der Steuereinheit 10 ein Piezo-Widerstands-Sensor 11 angeordnet, der elektrische Meßsignale an eine in der Steuereinheit 10 enthaltene nicht gezeigte Steuereinrichtung liefert. Die Steuereinrichtung ist über gemeinsam mit der Verbindungsleitung 9 verlegte Steuerleitungen 12 mit dem Motor der Tauchmotorpumpe 1 verbunden.

Der Balg 6, die Verbindungsleitung 7 und die zweite Verbindungsleitung 9 ist mit Luft gefüllt und gegenüber der Umgebung abgedichtet. Steigt nun der Flüssigkeitsspiegel F in dem Abwasserkanal, so wird der Balg 6 aufgrund der damit einhergehenden Zunahme des auf ihn einwirkenden Flüssigkeitsdruckes zusammengedrückt. Dies führt wiederum zu einem Druckanstieg, der in dem Balg 6 und den Verbindungsleitungen 7, 9 eingeschlossenen Luft, welche durch den Sensor 11 erfaßt wird. Liefert der Sensor 11 daraufhin ein Meßsignal, das über einem ersten Schwellenwert liegt, so löst die Steuereinrichtung das Einschalten der Tauchmotorpumpe 1 aus. Dementsprechend schaltet die Steuereinrichtung die Tauchmotorpumpe 1 wieder ab, wenn der Druck innerhalb des Balges 6 und den Verbindungsleitungen 7, 9 aufgrund eines Absinkens des Flüssigkeitsspiegels F abnimmt. Überschreitet dagegen das von dem Sensor 11 gelieferte Meßsignal einen Maximalschwellwert, so löst die Steuereinrichtung einen Alarm aus, durch den beispielsweise eine zweite Tauchmotorpumpe zu der ersten Tauchmotorpumpe 1 hinzugeschaltet wird.

Das Ein- und Abschalten der Tauchmotorpumpe 1 bzw. das Auslösen des Alarms kann auch durch Betätigen von Reglern 13a, b, c erreicht werden, durch deren Verstellen die Schwellwerte der Steuereinrichtung veränderbar sind. Dabei wird durch den ersten Regler 13a ein unterer Schwellwert, durch den zweiten Regler 13b eine Differenz zwischen dem unteren und einem oberen Schwellwert und durch den Regler 13c der Maximalschwellwert festgelegt. Dabei sind die Schwellwerte innerhalb der Steuereinrichtung frei veränderbar, wobei vor der ersten Inbetriebnahme der Tauchmotorpumpe 1 eine erste Eichung der erfindungsgemäßen Vorrichtung in Abhängigkeit von den gegebenen Betriebsbedingungen durchgeführt wird.

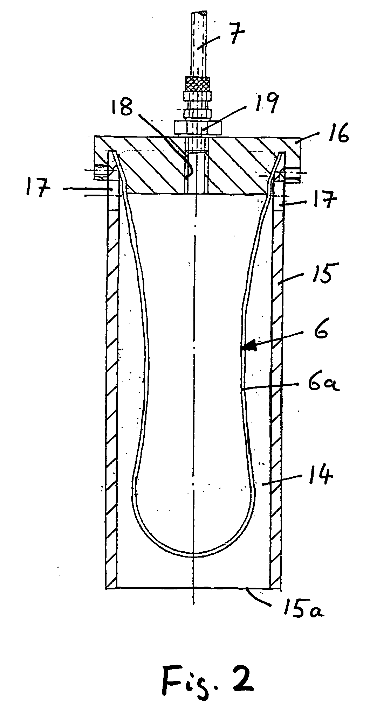

In dem in Figur 2 dargestellten zweiten Ausführungsbeispiel befindet sich der Balg 6 in einem Gehäuse, das von einem Rohr 15 gebildet ist, das senkrecht steht, d.h. seine Achse ist vertikal angeordnet und das an seine Oberseite durch einen Deckel 16 verschlossen ist. Die Unterseite des Rohrs 15 ist offen, so daß durch diese untere Öffnung 15a die Flüssigkeit in den Innenraum 14 des Rohres 15 ungehindert eindringen kann.

Der Deckel 16 weist eine koaxiale Gewindebohrung 18 auf, in den ein Anschlußteil 19 eingeschraubt ist, an dem die Verbindungsleitung 7 befestigt ist.

Der Balg 6 hat die Form eines länglichen Schlauches, wobei die Wände des Balgs 6 bei ausreichender Flexibilität eine geringe Eigensteifigkeit besitzen, so daß bei keiner Druckdifferenz zwischen Außenseite und Innenseite des Balgs eine Balgwand sich nicht vor die Öffnung 6b legt.

Im obersten Bereich des Rohrs 15 ist mindestens eine Entlüftungsöffnung 17 in der Wandung des Rohrs eingebrach, durch die sich im Innenraum 14 ansammelnde Gase, insbesondere Luft entweichen kann.

## Patentansprüche

1. Vorrichtung zum Überwachen von Flüssigkeitsständen mit einem den jeweiligen Flüssigkeitsstand erfassenden Meßfühler, der durch einen mit gasförmigen Füllmedium gefüllten Balg (6) gebildet ist, dessen von der Flüssigkeit benetzte Wände (6a) aus in Richtung des Flüssigkeitsdruckes nachgiebigem Material bestehen und nach der Befüllung des Balges (6) ungespannt sind, wobei der Balg (6) eine gegenüber der Flüssigkeit abgedichtete Öffnung (6b) aufweist, an die mindestens ein Sensor (11) angeschlossen ist, welcher die mit einer Änderung des Flüssigkeitsstandes einhergehende Zustandsänderung des in dem Balg (6) enthaltenen Mediums erfaßt, und wobei der Balg von einem Gehäuse umgeben ist, das mindestens eine Verbindungsöffnung (15a) aufweist, durch die die zu überwachende Flüssigkeit dringt und in dessen oberen Innenraum, insbesondere in der Behälterwandung eine Entlüftungsöffnung (17) ist.

2. Vorrichtung nach Anspruch 1, **dadurch gekennzeichnet,** daß die Öffnung (6b) des Balges (6) mit einem Ende (7a) einer mit dem Füllmedium befüllten Verbindungsleitung (7) verbunden ist, an deren anderem Ende (7b) der Sensor (11) angeordnet ist.

3. Vorrichtung nach Anspruch 2, **dadurch gekennzeichnet,** daß die Wände der Verbindungsleitung (7) flexibel ausgebildet sind.

4. Vorrichtung nach einem der Ansprüche 1 bis 3, **dadurch gekennzeichnet,** daß das Füllmedium Luft oder ein anderes Gas ist.

5. Vorrichtung nach einem der vorhergehenden Ansprüche, **dadurch gekennzeichnet,** daß der Sensor (11) als druckempfindlicher Piezo-Widerstand ausgebildet ist.

6. Vorrichtung nach einem der vorhergehenden Ansprüche, **dadurch gekennzeichnet,** daß der Sensor (11) mit einer elektrischen Steuereinrichtung verbunden ist, die bei Überschreiten vorgebbarer Schwellwerte Signale zum Steuern eines elektrischen Verbrauchers abgibt.

7. Vorrichtung nach Anspruch 6, **dadurch gekennzeichnet,** daß die Schwellwerte veränderbar sind.

8. Vorrichtung nach Anspruch 6 oder 7, **dadurch gekennzeichnet,** daß die Steuereinrichtung bei Überschreiten eines maximalen Schwellwertes ein Alarmsignal abgibt.

9. Vorrichtung nach einem der Ansprüche 6 bis 8, **dadurch gekennzeichnet,** daß der Sensor und die Steuereinrichtung in einer Steuereinheit (10) angeordnet sind und die Steuereinheit (10) entfernt zu dem elektrischen Verbraucher angeordnet ist, wobei die Steuereinheit (10) über elektrische Steuerleitungen (12) mit dem elektrischen Verbraucher und der Sensor (11) über eine zusätzliche Verbindungsleitung (9) für das Füllmedium mit dem Balg (6) verbunden ist.

10. Vorrichtung nach einem der Ansprüche 6 bis 9, **dadurch gekennzeichnet,** daß die Schwellwerte durch Regler (13a,b,c) frei veränderbar sind, wobei durch einen ersten Regler (13a) ein erster Schwellwertr und durch einen zweiten Regler (13b) eine Differenz zwischen dem ersten und einem zweiten Schwellwert einstellbar ist.

11. Vorrichtung nach einem der vorhergehenden Ansprüche, **dadurch gekennzeichnet,** daß sie zur Steuerung und Überwachung einer Pumpe, insbesondere einer Tauchmotorpumpe (1) dient.

12. Vorrichtung nach einem der vorhergehenden Ansprüche, **dadurch gekennzeichnet,** daß sie als Niveauregler dient.

13. Vorrichtung nach Anspruch 11, **dadurch gekennzeichnet,** daß der Balg (6) in einer den Behälter bildenden Tasche (5) einsitzt, die an die Pumpe angeformt ist und die zu der von der Pumpe (1) geförderten Flüssigkeit geöffnet ist.

14. Vorrichtung nach einem der vorhergehenden Ansprüche, **dadurch gekennzeichnet,** daß mindestens ein Teil der Verbindungsleitung (7, 9) innerhalb des Tauchmotorpumpengehäuses (4) angeordnet ist.

15. Vorrichtung nach einem der Ansprüche 11 bis 14, **dadurch gekennzeichnet,** daß die Verbindungsleitung (9) zwischen der entfernt zu der Tauchmotorpumpe (1) angeordneten Auswerteinrichtung und der Tauchmotorpumpe (1) über ein Kupplungsstück (8) an die in oder an der Tauchmotorpumpe(1) angeordnete Verbindungsleitung (7) ankuppelbar ist.

16. Vorrichtung nach einem der vorhergehenden Ansprüche, **dadurch gekennzeichnet,** daß der Balg (6) die Form eines länglichen Schlauches hat.

17. Vorrichtung nach einem der vorhergehenden Ansprüche, **dadurch gekennzeichnet,** daß die Wände des Balgs (6) bei ausreichender Flexibilität eine geringe Eigensteifigkeit besitzen, so daß bei keiner Druckdifferenz zwischen Außenseite und Innenseite des Balgs eine Balgwand sich nicht vor die Öffnung (6b) legt.
